Europäisches Patentamt

European Patent Office

Office européen des brevets

(19)

(11) **EP 1 381 185 A1**

(12) ## EUROPEAN PATENT APPLICATION

(43) Date of publication:
**14.01.2004 Bulletin 2004/03**

(51) Int Cl.⁷: **H04L 12/24**, H04L 12/58, H04L 29/06

(21) Application number: **02254902.6**

(22) Date of filing: **12.07.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **BRITISH TELECOMMUNICATIONS public limited company**<br>**London EC1A 7AJ (GB)** | (72) Inventor: **The designation of the inventor has not yet been filed**<br><br>(74) Representative:<br>**Lidbetter, Timothy Guy Edwin et al**<br>**BT Group Legal Services,**<br>**Intellectual Property Department,**<br>**8th Floor, Holborn Centre,**<br>**120 Holborn**<br>**London EC1N 2TE (GB)** |

(54) **Mediated communications**

(57) In a process for mediating communication attempts, a caller 20 transmits an information request to a mediation agent 22, which generates an availability profile 23 identifying the availability of the addressee to take part in a communication connection. The availability profile includes non-Boolean graduated availability values, indicative of addressee preferences. The use of graduated values, as distinct from Boolean properties (yes/no - true /false) allows an addressee to define degrees of availability, to define the degree of urgency or importance a call must have to justify the interruption it will cause.

To ensure call attempts have been mediated according to this process, the availability profile may include a code associated with the addressee, a call set-up request to that addressee only being connected if the code currently associated with the addressee is included in the request.

The mediation agent may identify, from stored data, whether any special conditions are applicable to the caller, so that users whose calls are particularly welcome (or unwelcome) can be identified and handled differently.

The mediation agent may identify one or more communications channels available for use between the caller and the addressee, for example voice, full video facilities, data, etc. Different availability values may be provided for different channels of communication. The availability profile may identify whether any of the modes are only available under special conditions, for example only when both parties have the appropriate equipment available.

The process allows the caller, (or a computer-based agent), on receiving the availability profile, to negotiate with the addressee's agent to determine a mutually optimum communication mode. ncial accounts of the caller and user respectively should the call be made. The process may allow the addressee to cancel the payment if he considers the interruption was justified.

Figure 2.

EP 1 381 185 A1

**Description**

This invention relates to communications systems, and particular to the establishment of a communications connection between two parties having competing preferences for the communications channel to be used, and other characteristics such as time.

In this specification the following terms are used with the following meanings. The term 'communication connection' is used as a general term for the process of two parties communicating with each other by any means. A "communication attempt" is the process of setting up such a connection (whether or not it is successful). The term 'communication channel' is used to identify the type of communication that is used, such as e-mail, fixed phone, or video-conferencing. The term 'communication mode' is used for the primitive processes (such as audio, visual, or touch) that underlie these channels, by which human beings interact with the communications devices they use and thereby with each other. Text can be considered as a distinct mode, as although it is usually a visual medium it can be used in other ways - for example it can be converted to synthesised speech, or a Braille display, making it capable of use by a blind person. The term 'communication pattern' is used to mean the set of directed communication modes that characterise a particular communication channel - for example one-way text-only (email) or two-way audio-visual (video conferencing).

There can be many competing demands for the attention of a person, of which incoming communications are but one example. In interpersonal communications both the person initiating the communication attempt (hereinafter referred to as the "caller") and the person with whom the caller wishes to establish communication (hereinafter the "addressee") have an interest in helping to manage interruptions (i.e. controlling if, when, and how an interruption occurs). It is a well-recognised problem that people, especially with a rapidly-increasing range of communication channels available to them, often choose an inappropriate (or at least non-optimal) communications channel for the immediate context. For example, a caller may have the choice of many different channels, such as e-mail, fixed phone, text-message, mobile phone, video-conference, Internet chat, paging, and others. Methods are now available to help the addressee manage these demands more effectively. Examples include e-mail "assistants", (which sort and prioritise incoming electronic mail by criteria such as sender and subject), and telephone answering machines.

However, it is the caller who currently selects the mode to be used to contact an addressee. His selection is based upon many factors, which may include the addressee's expected preferences if the caller knows them - though it is often the case that these expectations are wrong or inaccurate. A particular problem is that the optimum call mode for one party may not be optimum for the other - for example a telephone call may give the caller an immediate response, but can be highly disruptive to the activities of the addressee. Conversely, if the addressee has set up an answering service in order to avoid disturbance by non-urgent calls, it will also prevent urgent calls from reaching the addressee. In this situation the caller will not get the immediate response he may need.

A related, and emerging problem is that people are increasingly bombarded by incoming communication attempts. As the 'always on' culture develops, people are seeking mechanisms that help them control their accessibility to others. Existing systems to control accessibility are Boolean (true/false) in nature: a user is either accessible by a particular mode to a particular caller, or he can make himself inaccessible. There are several ways of being inaccessible. One can simply ignore incoming communications attempts (letting the telephone ring, or not opening an individual email), or one can make oneself unaware of them (diverting or barring incoming communication attempts, not opening an email mailbox)

Systems exist which can mediate incoming communication attempts in a more sophisticated way, for example post-delivery filters that selectively answer calls, or divert them to an answering service, according to the caller's identity. Other filters sort incoming electronic mail into different mailbox files according to sender, so that the addressee can identify and respond to those from the most important senders first. However, calls from the same caller may be of different importance, and this cannot be recognised without further indications of urgency or importance. Pre-filtering systems also exist, that creates content/requests (such as senders of e-mail messages indicating a 'priority' level), but generally these fail to reflect the much more subtle interaction mechanisms and cues inherent in natural person-to-person interactions. Such indications are available on electronic mail systems, but are open to abuse or mere inconsistency between individual callers, whose opinions on the importance of the call may not match the priorities of the addressee. Filter systems generally also pre-suppose that the mode of communication has been selected - however there are many circumstances in which a addressee may have a preference, in particular between audio and visual media, depending on the type of device he has available, the environment he is in (for example noisy or poorly lit), personal characteristics (impaired hearing or vision) or other circumstances (for example operating a vehicle or other machinery and therefore unable to manipulate a keypad). It should be noted that the calling party might also be constrained by similar factors.

The present applicant company's International Patent application W098/07282 describes an intelligent personal assistant that can help manage incoming communication attempts on behalf of a user, by the use of software agents which negotiate on the basis of a set of alternative connection configurations arranged in a preferential ranking scheme for each user, to control the generation of proposals and counterproposals by agents acting on behalf of the caller and addressee to find a mutually acceptable configuration.

However, the current process of creating and responding to a communication attempt still includes a strong asymmetry between the relative ease of creation, and the burden of response - which is often at odds with the relative benefits to caller and addressee. The present invention allows the caller to take on more of the burden of the interaction between him and the addressee, to the mutual benefit of both of them.

According to the present invention, there is provided a process for mediating communication attempts from a caller to an addressee, comprising the steps of:

> the caller transmitting an information request to a mediation agent
> the mediation agent generating from stored data one or more availability profiles, identifying the availability of the addressee to take part in a communication connection;
> the caller retrieving an availability profile, the availability profile including non-Boolean graduated availability values, indicative of addressee preferences
> the caller generating a call set-up request in accordance with the availability profile.

The use of graduated values, as distinct from Boolean properties (yes/no - true /false) allows an addressee to define degrees of availability, to define the degree of urgency or importance a call must have to justify the interruption it will cause.

To ensure call attempts have been mediated according to this process, the availability profile may include a code associated with the addressee, a call set-up request to that addressee only being connected if the code currently associated with the addressee is included in the request. The code may be varied form time to time to ensure that the caller is using the current availability data for the addressee.

The mediation agent may identify, from stored data, whether any special conditions are applicable to the caller, so that users whose calls are particularly welcome (or unwelcome) can be identified and handled differently.

The mediation agent may identify from stored data one or more communications channels available for use between the caller and the addressee, for example voice, full video facilities, data, etc. Different availability values may be provided for different channels of communication. The available communications modes are defined with reference to at least one of directionality (two-way, one way transmission) mode (video only, data, audio, or some combination of these), or synchronicity (channels requiring both parties to interact in real time - for example a telephone call), or delayed (not requiring such interaction, for example an answering service or a text message). The availability profile may identify whether any of the modes are only available under special conditions, for example only when both parties have the appropriate equipment available.

The process may allow the caller, or a computer-based agent), on receiving the availability profile, to negotiate with the addressee's agent to determine a mutually optimum communication mode.

The generation of the availability profile may take account of caller properties identified in the initial request from the caller, such as:

> identity of the caller
> topic(s) of intended conversation
> expected duration of conversation
> expected benefit of conversation to caller
> expected benefit of conversation to addressee
> financial penalty the caller is prepared to pay
> degree of urgency

The caller may provide values for the required caller properties in response to a prompt from the addressee's mediation agent, a default value being used for any property for which the caller does not identify a value.

The process by which the caller may complete a call request may be given a variable degree of difficulty according to the availability value in the addressee's availability profile, in order to deter frivolous callers from disturbing addressees who do not wish to be disturbed. This may be a task that varies in complexity or the physical force required to operate a control, or a financial penalty payable to the addressee by the caller. In the latter case a payment process is included for performing the financial transaction of debiting and crediting financial accounts of the caller and user respectively should the call be made. The process may allow the addressee to cancel the payment if he considers the interruption was justified.

The process is preferably mediated between the mediation agent acting for the addressee and a second mediation agent acting for the caller.

The availability profile, once generated, may be stored by the addressee's mediation agent for a predetermined period, or until a call is actually connected, such that it may be accessed for a plurality of call requests by one or more callers during that period. The connection of a call changes the addressee's availability profile, at least for the duration of the call, so a new availability profile should then be generated.

As will be understood by those skilled in the art, any or all of the software used to implement the invention can be contained on various transmission and/or storage mediums readable by a suitable computer input device, for example a floppy disc, CD-ROM, or magnetic tape optically readable marks, magnetic media, punched card or tape, so that the program can be loaded onto one or more general purpose computers, or downloaded over a computer network using a suitable transmission medium such as an electromagnetic or optical signal.

The invention also extends to a call mediation station for managing the mediation of telecommunications call requests, comprising means for receiving inputs indicative of communications modes available for use in calls made to an addressee terminal, means for storing said data, means for generating availability profile data from said stored data, the availability profile including non-Boolean graduated availability values, indicative of addressee preferences, and means for transmitting said availability profile input to a caller in response to a call request.

The call mediation station may have means to store data relating to individual calling terminals, means to generate and store different availability profiles for different calling terminals, means to identify the caller making a call request and means to transmit the respective availability profile stored for that caller

The call mediation station may be arranged to mediate requests to a plurality of addressee terminals, or a terminal station arranged to mediate control of incoming call attempts only to itself.

The invention also extends to a telecommunications station for generating call requests to such a mediation station, comprising means for requesting availability information from a call mediation addressee, and control means for processing the availability information received to generate a call request in response to said availability information, wherein the availability information includes one or more non-Boolean graduated properties and the control means includes means for controlling the responsiveness to a command action in accordance with the value of said graduated properties. The control means may be a haptic control (that is to say, one with a force-feedback system responsive to an input) arranged such that the force required to operate it is related to the values of the graduated properties.

This invention allows the caller to become apprised of specific data that represents the addressee's communicative availability, as the addressee currently wishes it to be perceived at this time by this caller. This would not necessarily relate to an addressee's true communicative availability - which merely depends upon having certain physical resources (e.g. for audio, a microphone and adequate network facilities) - but to whether he wishes to use the resources currently available to him to communicate with that specific caller.

The invention allows the selection of a mutually satisfactory communications channel by mediating the current preferences/requirements of each of the potential participants, in which addressees have fine-grained expression of how they can be contacted by different people at different times, and callers may discover, query, and commit to particular communication modes suggested by the prospective addressee.

For example, it becomes possible to express interactions such as:

an addressee notifying a caller that he would prefer not to be disturbed, but that he will accept a call if the caller judges that it merits disturbing him ("trust caller");
an addressee notifying a caller that he can only make the intended call if he is willing to pay a penalty cost if the addressee judges it appropriate to do so - the penalty may be financial or, for example, more limited access to that addressee in future ("do not trust caller");
an addressee notifying a caller that he will only accept calls on certain topics.

The addressee does not respond directly to a caller during this transaction; an agent based system processes incoming call attempts and mediates with the caller, the connection with the addressee being made by the agent only if the caller meets the criteria set by the addressee.

This invention allows users to better control their availability, and so helps avoid incoming message overload, at the expense of increasing the difficulty for prospective callers to make contact. The nature of this increased difficulty is such that called parties have a greater motivation to answer those calls that are made. The process provides an assistive (not replacement) mechanism to help establish calls, that is to say the mechanism seeks to negotiate a proposed contract between the called and calling parties. However, it does not ensure its enforcement - the caller may decide the terms placed on it by the addressee, and decline to make the call.

An important feature of the invention is that while it is possible to begin using the system in simple contexts (with primitive 'group' level preferences), increasingly sophisticated use may be made (and benefits enhanced) as experience of its use increases.

For example, the invention could form the basis of improved telemarketing systems. If companies disclosed information on their product, a potential addressee's agent could filter and set the interruption costs on calls from that company appropriately. This allows far greater fidelity than merely preventing all companies from calling the addressee's number, and might even benefit the companies, who would only call people willing to be called, and at times they consider appropriate. An addressee can set the interruption cost for a given caller at any level he considers appropriate to make the caller pay for the addressees' time. An addressee setting a high interruption cost will receive fewer calls (but more money for each one) than an addressee setting a lower interruption cost.

This invention takes advantage of natural human behaviours and requirements to optimise the mediation of communication attempts. In particular, people making a call are usually more open to the mode to be used in that communication than is the addressee, so that if the addressee's preferences lead the negotiation, this constrains the mediation more quickly. Generally, a very wide range of people wish to contact a given individual - some of those may be trusted to respect the addressee's preferences, or their calls may even be positively desired by the addressee, (generally because in some way the addressee will benefit from the call), whilst others may be undesired, or even nuisance, callers.

Whilst people increasingly have multiple accounts for the same type of communication channel (fixed and mobile telephone numbers, multiple email addresses), their availability to partake in such a communication is largely independent of the individual accounts, and so availabilities are quoted for general communication patterns, rather than specific channels. For example, one might use multiple text-chat clients (Yahoo, Groove, ICQ,...), or multiple e-mail addresses, and yet the user is likely to have an equal availability threshold for each.

Preferably, the communication modes from which the selection is to be made are defined by individual communication patterns, defined in terms of mode (audio, video, text/data, etc), each of which may have one of four directionalities (send only, receive only, two way, or not used).

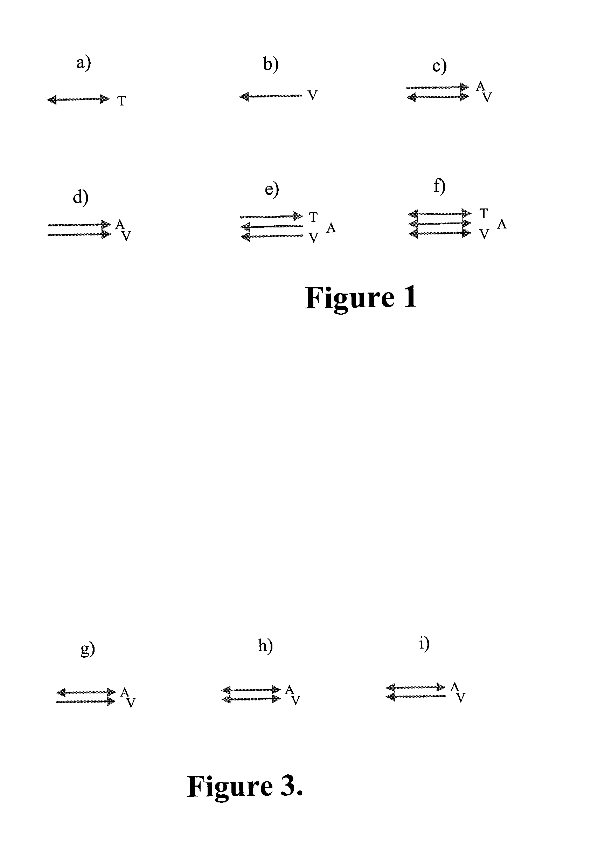

Figure 1 shows some of the many possible distinct communication patterns based upon the three primitives of text (T), audio (A) and video (V), each with four possible directionalities (send only, receive only, bi-directional, or not used) giving sixty-three possible distinct communication patterns ($4^3$- 1, excluding the null case). Quoted availabilities are from the perspective of the participant on the right-hand side of these diagrams. Informally, a) represents 'text-chat', b) 'video monitoring', c) 'eye-to-eye lecture', d) 'TV', e) 'text-based audio-video control', and f) 'text-enhanced video-conferencing'. Note that the actual medium used (for example fixed-wire analogue telephone, digital cellular telephone, satellite broadcast), and the network operator providing the service, is not material to this analysis

An addressee's willingness to be interrupted (which closely relates to availability) often depends significantly upon factors known only to the potential caller. By clearly extracting these factors (in the form of a method signature), a drastically increased level of subtlety and optimisation in the mediation becomes feasible.

To discourage abuse (or wilful ignorance) of the quoted availability by less scrupulous callers, a penalty cost can be associated with the call request. This is particularly important for supporting "non-trusting" relationships. The normal procedure would be for this money to be returned on call completion. If the addressee considers that the interruption of the call was inappropriate, however, he may decline to return this money. In practice, it is envisaged that the deterrent effect of this mechanism would usually be sufficient to ensure its appropriate use.

The embodiments of the invention will be described in a context where Intelligent Personal Assistants (personal agents) play a dominant role in aiding and managing the users' Information Technology requirements. Each user's agent acts as a single point of contact for his communications, and has an interface that allows communication attempts to be handled. This could either be used directly (by-passing the assistive process), or it could be used in conjunction with the assistive process, in which case the request is accompanied by a certificate/ticket showing the assistive process has been used.

A consequence of the fact that the process is assistive is that the addressee is free to construct his Availability object however he wishes, on the basis of as much factual (or fictional) information as he wishes. Depending upon the degree of trust previously established between the parties, it is possible for highly variable responses to be constructed, varying the trade-off between maintaining personal privacy, and openness. The embodiment provides a rich language through which users can communicate their intent - but the extent to which they actually use this language is then their choice.

As a simple example, distinct availabilities can be specified for each possible communication mode, but users may choose to only specify availabilities for those modes they wish to - irrespective of whether or not they have a wider range of communicative capabilities available.

Similarly, the degree to which local resource availability is taken into account when constructing the Availability object is entirely at the discretion of the addressee's agent. This allows the mechanism to be used in a wide variety of contexts, including technology-impoverished environments in which resource availability information may be difficult to automatically determine.

Although explicit inclusion of cost is crucial (mainly to support mediation between less-trusting participants), many calls will have zero associated cost and only those with non-zero cost (or calls above a particular threshold) may need to be presented to the caller to determine whether he is willing to forfeit that cost.

In the embodiment, the availability figures are quoted as percentages rather than absolute Boolean (yes/no) values. Although this may seem to offer an unnecessary degree of fidelity, it is expected that, over time, users will become comfortable and sensitive to such subtlety. For this to begin to happen however, users must develop a common understanding as to the semantic meaning to be associated with a given percentage figure - probably based upon commonly-understood social situations.

Having communicated one's availability for differing communication modes, the caller's agent is then able to apply its own local policies and knowledge to determine an appropriate action. Depending upon the agent's level of prior knowledge, this process may be either automatically accomplished or, more likely, require direct interaction with the user in order to elicit further requirements. Factors that may influence this decision may include: the threshold of willingness to be interrupted (that is to say, whether the addressee has set a penalty for interruptions higher than the caller is willing to incur), the caller's preferred usual modes of communication, the caller's past history of communication with that person, and the physical resources available to the caller, all of which can be known by the caller's agent.

The inherent difficult of searching the (potentially very large) state-space represented by the "Availability" abstraction can be reduced by the inclusion of meta-data (descriptive features that distinguish key characteristics of the state-space), and this can be especially helpful in configuring an appropriate user interface to the user (from which to extract the important additional requirements).

The system can be applied in any typical architectural configurations, for example users each having separate user accounts in the same or different service providers, or for peer-to-peer (internet-style) user agents where the costs are transferred through electronic cash or micropayment mechanisms.

A specific embodiment of the invention will now be described, with reference to the Figures, in which:

Figure 1 represents several examples of possible communication patterns, as has already been discussed.
Figure 2 is a data flow diagram of the mediation process of an embodiment of the invention
Figure 3 represents three further communication patterns of the type shown in Figure 1.

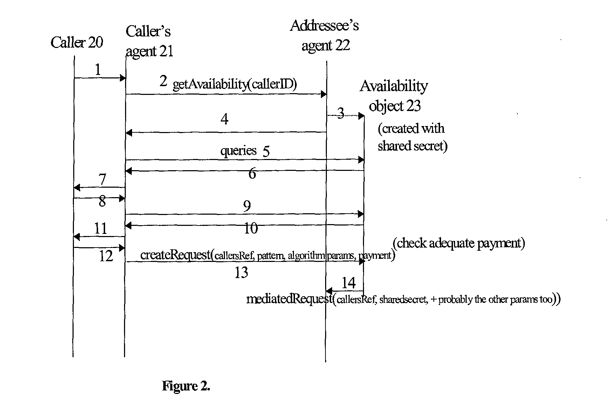

This embodiment is a Java and XML-based implementation of the processes that incorporates the three key features described earlier, though the features could be equally well built upon many other distributed communication protocols (e.g. JXTA, SIP, XML over HTTP, FIPA, etc...). The overall process is depicted in Figure 2, and is described in the following sub-sections.

Figure 2 represents the interactions between a human caller, acting through an interface 20, a caller client server 21, an addressee server 22 and an availability object 23 initially generated by the addressee server 22, but which may subsequently be maintained on some other computer equipment. Although Figure 2 may imply that that the availability object 23 actually resides on the same machine as the agent 22 that created it (which may indeed reduce security concerns), it may migrate to the caller's machine 21 or a third party machine if associated mechanisms are available to maintain its integrity and privacy

The first stage of the process is for the caller 20 to initiate the attempt to contact the addressee by generating an instruction (step 1) to his agent 21 to transmit a request for an Availability object 23 from the Addressee's agent 22 (step 2), discovered either through a direct-value exchange with the addressee's agent 22 as shown or, if such an object already exists, through a directory service as will be described. The method signature includes, as a minimum, a token to identify the (potential) caller (or, equivalently, the invocation could be digitally signed). If not supplied by the caller 20, this token will at least allow the Addressee's agent 22 to construct an Availability object 23 customised to that Caller 20. If no token is used, the request is essentially from an anonymous source, and the Addressee's agent 22 is likely to be far less open or helpful in its response.
Psuedo-code to support this is:

```
interface AgentComms {

        //many other methods

        Availability getAvailability(String callerIdentification);


}
```

The next stage is to construct the Availability Object 23 itself. This is shown in Steps 3 and 4 of Figure 2. This object has a number of attributes. The first attribute that needs to be described relates to the communication patterns themselves. If we first consider synchronous communications involving, say, three modes (audio, video and text transfer), then "Availabilities" need to be quotable for any combination of these, and with any combination of directionalities (see Figure 1). Further, it is also desirable to be able to quote one's availability for receiving a communication in an asynchronous channel such as e-mail, though in this case it is not necessary to differentiate between modes. Quoting such a figure would give a caller 20 (potential message sender) an indication of how likely the message is to be read, and how quickly - a useful additional feature to current systems.

The pseudo-code to support this is:

```
class Mode {
        boolean   transmit;
        boolean   receive;
        Mode(boolean transmit, boolean receive);
        //accessor methods
}


interface CommsPattern {    //null



}


class SynchCommsPattern implements CommsPattern {
        Mode      video;
        Mode      audio;
        Mode      text;
}


class AsynchCommsPattern implements CommsPattern {
        AsynchCommsPattern();
        //accessor methods
}
```

For example, to represent the communication pattern in Figure 1c) use:

Mode vid = new Mode(true, true);

Mode aud = new Mode(true, false);

Mode tex = new Mode(false, false);

```
CommsPattern pattern1 =

new SynchCommsPattern ( vid, aud, tex );
```

or for an asynchronous communication mode:

```
CommsPattern pattern2 =

new ASynchCommsPattern();
```

As discussed above, it is generally true that a person's willingness to be communicated with depends strongly upon the identity and other circumstances of the caller (initiator) - and for this reason this embodiment specifies availability as a method signature rather than a fixed value attribute. Dependency on the caller occurs when the Availability object is first created. The content of that object can be customised entirely to that particular caller. Dependency upon the communication mode occurs as part of the complete algorithm, as will be discussed later. As well as allowing dependency upon the caller, and the intended communication pattern (both dependencies of which are automatically embedded within the protocol of the present embodiment), explicit dependency is allowed for:

topic(s) of intended conversation
expected duration of conversation
expected benefit of conversation to caller (%)
expected benefit of conversation to addressee (%)
cost prepared to pay (this is distinct from the penalty cost, and represents additional monies (or pay rates) the caller is willing to pay in order to communicate with the addressee)
degree of urgency.

It may not be possible to capture all this information from the caller 20, so in general small but distinct subsets of this information will be made available to the caller's agent 21. It is also necessary to distinguish between parameters that are zero-valued, and those whose values are simply unknown/unspecified. Where ambiguity is important, the implementation signature includes Boolean (true/false) tags to indicate whether the subsequent value is intentionally-valued (true), or unknown (false).
Hence pseudo-code for the method signature is:

```
int getInterruptability(           //method returns % figure

    Vector <String>       topics,


boolean      duration_active,
int          duration,         //expected duration in secs


boolean      caller_benefit_active,
int          caller_benefit,        //expected % benefit to caller
```

```
boolean    caller_benefit_active,

int        addressee_benefit,    //expected % benefit to addressee


int        prepared_to_pay, //distinct from the penalty


boolean    urgency_active,

int        degree_of_urgency //% figure indicating urgency  );
```

As previously discussed, there are benefits in allowing the process to describe key features of the algorithm's behaviour in terms of meta-data - though the extent to which this is performed, and the extent to which it accurately reflects the algorithm, is at the discretion of the addressee's agent 22. In this embodiment, XML is used to allow five top-level features to be expressed, namely:

the maximum availability value returned by the algorithm
the minimum availability value returned
method signature parameters that significantly influence (by more than 30%) the returned availability value
method signature parameters that partially influence (by 10-30%) the returned availability value
the default availability value returned if no parameters are supplied

Expressed as an xml dtd this is (xml dtd file: "comms_set_meta_data.dtd"):

```
<!ELEMENT            avail_meta_data(max?,min?,key_dependencies?,
minor_dependencies?,default_availability?)>
<!ELEMENT max (#PCDATA)>
<!ELEMENT min (#PCDATA)>
<!ELEMENT  key_dependencies  (topics?,  duration?,  caller_benefit?,
addressee_benefit?, prepared_to_pay?, urgency?)>
<!ELEMENT minor_dependencies (topics?, duration?, caller_benefit?,
addressee_benefit?, prepared_to_pay?, urgency?)>
<!ELEMENT default_availability (#PCDATA)>
```

9

```
<!ATTLIST max avail CDATA #REQUIRED>
<!ATTLIST min avail CDATA #REQUIRED>
<!ELEMENT topics (#PCDATA)>
<!ELEMENT duration (#PCDATA)>
<!ELEMENT caller_benefit (#PCDATA)>
<!ELEMENT addressee_benefit (#PCDATA)>
<!ELEMENT prepared_to_pay (#PCDATA)>
<!ELEMENT urgency (#PCDATA)>
```

Such templates would need to be made widely available to clients in order that they can understand the meta-data itself. As an example, valid meta-data that would then be associated with the availability algorithm might be (xml file: "comms_set_meta_data.xml"):

```
<?xml version="1.0"?>
<!doctype avail_meta_data system "comms_set_meta_data.dtd">
<comms_set_meta_data>
<max avail=''65%''> </max>
<min avail=''10%''> </min>
<key_dependencies>
         <topics>project   proposal,   awayday   agenda,   foreign
trip</topics>
         <urgency> 40 </urgency>
</key_dependencies>
<minor_dependencies>
         <caller_benefit >
</caller_benefit >
</minor_dependencies>
<default_availability> 60% </default_availability>
</comms_set_meta_data>
```

The meta-data can thus be represented in the Availability object 23 as simply an Internet address (URL) from which the .xml file can be obtained. Since this file itself refers to its own DTD, a separate representation of the DTD's location may not be necessary (and is not included in this implementation).

The penalty cost is a simple fixed-value parameter that represents an amount of money.

Combining these three elements defines the core of the process. Each specified communication pattern has an associated availability algorithm, and an associated penalty cost. It is also possible to associate a set of communication modes with the availability algorithm, and penalty cost. For example, a user may wish to quote all three of the depicted modes g), h) and i) in Figure 3, as 'equivalent' in terms of their availability to partake in such a communication pattern. These three modes all include audio and video provision (but not text), and all have two-way audio (unlike the examples c) and d) in Figure 1, but they differ in the directionality of the video transmission. In this example, the addressee has nevertheless deemed the three (distinct) communication patterns as equivalent in terms of their availability metrics, and they will thus form a single CommsSet object.

```
abstract class CommsSet {
        Vector <CommsPatterns>;    //with read-only accessor
        int penaltyCost;     //with read-only accessor
        abstract  void getInterruptability(…..);
        java.net.url getMetaData();
}
```

This class is abstract because what needs to be actually instantiated is an instance of a class that provides an implementation for the getInterruptability() method, and it is intended that users may construct as complex an implementation algorithm as they wish.

The caller's agent 21, in the process of constructing the Availability object, would therefore actually use a class of its own choosing, such as

```
class CustomisedCommsSet extends CommsSet {
        //provides constructor and algorithm implementation
        void getInterruptability(…..);
}
```

Different addressee agents 22 may typically be polled at different rates depending upon the level of association the caller 20 has with them, the suggested 'time to live' indicated by the interruptability object itself, and the local resource utilisation (e.g. network bandwidth and processing resources). Since the addressee's agent 22 always maintains ultimate control, it can deter callers who blatantly disregard the suggested 'time to live' by either refusing to create Availability objects 23 for that client, or by modifying the availability values (and meta-data) accordingly.

```
Time getTimeToLive();         //indication of info's stability
```

The core Availability object 23 created is thus an instance of:

```
class Availability{
        private boolean active;   //internal   state   that   limits
requests
        Time getTimeToLive();    //indication of info's stability
        Vector <CommsSet>;
        void createRequest(…);//see later
}
```

A final enhancement is the provision of an additional level of meta-data to describe the availability algorithm. Whereas the previous meta-data described merely key features of a single, specific availability algorithm (at the CommsSet level), additional meta-data can be provided to represent features of the whole set of algorithms contained in an Availability object. Again, this has a similar structure to the previous meta-data, but with the addition of the following features:

an overall indication of 'preferred mode'
an indication of whether penalty costs are associated with any of the quoted modes (regarded as very significant information)
'Default availability' is no longer meaningful in this context, and can be omitted. Formally, the xml dtd to be made well-known to clients is (xml dtd file: "avail_meta_data.dtd"):

```
<!ELEMENT
avail_meta_data(preferred_mode?,max?,min?,key_dependencies?,
minor_dependencies?,cost?)>
<!ELEMENT preferred_mode (#PCDATA)>
<!ELEMENT max (#PCDATA)>
<!ELEMENT min (#PCDATA)>
<!ELEMENT  key_dependencies  (topics?,  duration?,  caller_benefit?,
addressee_benefit?, prepared_to_pay?, urgency?)>
<!ELEMENT minor_dependencies (topics?, duration?, caller_benefit?,
addressee_benefit?, prepared_to_pay?, urgency?)>
<!ELEMENT default_availability (#PCDATA)>
<!ELEMENT cost(#PCDATA)>
<!ATTLIST preferred_mode vector_element CDATA #REQUIRED>
<!ATTLIST max avail CDATA #REQUIRED>
<!ATTLIST min avail CDATA #REQUIRED>
<!ATTLIST cost value (true, false) #REQUIRED>
<!ELEMENT topics (#PCDATA)>
<!ELEMENT duration (#PCDATA)>
<!ELEMENT caller_benefit (#PCDATA)>
<!ELEMENT addressee_benefit (#PCDATA)>
<!ELEMENT prepared_to_pay (#PCDATA)>
<!ELEMENT urgency (#PCDATA)>
```

and valid example meta-data is:

```
<?xml version="1.0"?>
<!doctype avail_meta_data system "avail_meta_data.dtd">
<avail_meta_data>
<preferred_mode vector_element=''0''> </preferred_mode>
<max avail=''80%''> </max>
<min avail=''10%> </min>
<key_dependencies>


        <topics>project  proposal,  awayday  agenda,  foreign
trip</topics>
        <urgency> </urgency>
</key_dependencies>
<minor_dependencies>
        <addressee_benefit >
</caller_benefit >
</minor_dependencies>
<cost value=''false''> </cost>
</avail_meta_data>
```

The final definition of the Availability class therefore becomes:

```
class Availability{
        private boolean active;   //internal   state   that   limits
requests
        Time getTimeToLive();        //indication    of    info
stability
        Vector <CommsSet>;
        void writeContract(…);//see later
        java.net.url getMetaData();
}
```

Having been constructed, the Availability object can now be queried or examined by the Caller's agent, as shown in Figure 2, steps 5 to 11. The caller's agent 21 transmits a request for information to the addressee's agent 22 (step 5), which replies (step 6). Typically, the first information to be examined would be the time-to-live, which gives the client 22 an indication of the volatility of all the subsequent information, and allows it to schedule when to request a new Availability object. Following this, the meta-data associated with the object would be examined, and on the basis of this an appropriate user interface can be presented to the caller 20 (step 7). Detailed, and multiple invocations on the CommsSet data may then occur (steps 8, 9, 10, 11) in order to explore/negotiate the optimum communication pattern.

The requirements upon this user interface 20/21 depend upon three factors:

the degree of detail/complexity contained in the Availability object, and indicated by its meta-data

the perseverance with which the caller wishes to explore the various communication possibilities

the level of constraint imposed by pre-conditions (such as locally-available user interface resources, and user-defined handling policies)

Factors to be considered can range from the trivial (e.g. the presentation of telephony ring tone to a user) to the complex. In this embodiment, a resource-rich environment is assumed, having PC-like facilities, including a force-feedback haptic mouse), a complex Availability description, and a strong degree of determination by the caller to obtain an optimum communication connection. This is the situation that might exist when a subordinate caller attempts to communicate with a superior (e.g. an employee communicating with a more senior colleague).

The interface between the user 20 and the agent 21 may take any form, from a simple audio connection (with speech recognition software associated with the agent 21) to a complex PC based system with a graphical display to indicate the choice of communication modes available (and their associated penalty cost), and a haptic mouse or other physical input device. The position of the mouse may be used to select between modes, resistive feedback on the mouse indicating the availability of the addressee in that mode. The manual effort applied to overcome the resistive feedback is taken to indicate the degree of expected benefit to the caller 20. In an alternative implementation, a strong vibration effect may be applied to the mouse to indicate the caller's availability, the urgency being assessed by the extent to which a user then constrained the vibration.

So far, the process has only allowed the caller 20 to query the addressee's (potential) availability. Having established the addressee's availability, the caller 20 can now place a call (step 12). This may take place immediately after, or at any time subsequent to, the previous steps, provided that the "time to live" has not expired. Callers 20 who have not carried out the availability process (steps 1 to 11), or who are using out of date availability objects are given lower priority by the addressee's agent 22 in the subsequent session-request process (steps 12 to 14) compared to those that have used this process. The call set-up process therefore includes a mechanism to show (to the addressee's agent 22) that the caller 20 has actually used the assistive process (step 1 to 11).

As part of the call set-up process the caller will also need to pre-pay any (non-zero) penalty cost, which requires a payment mechanism (e.g. Java Wallet) to be accessible to the clients 21, 22. Using this local mechanism, a form of guaranteed payment can be created (typically a signed e-cash note), which can then be passed as a simple attribute to the following method:

```
void createRequest(

//the first set of parameters are exactly the same as those
//taken by the availability algorithm

        Vector <String>      topics,

        boolean   duration_active,

int          duration,        //expected duration in secs

boolean    caller_benefit_active,

int          caller_benefit,        //expected % benefit to caller

boolean    caller_benefit_active,

int          addressee_benefit,    //expected % benefit to addressee

int          prepared_to_pay, //distinct from the penalty

boolean    urgency_active,

int          degree_of_urgency, //% figure indicating urgency


//the following parameter represents the actual electronic
//payment itself (whose value should be equal to the
//'prepared_to_pay' parameter above

        int          electronic_payment

);
```

The addressee's agent 22 firstly checks that the proposed contract is valid - for example, that the e-cash payment itself at least exceeds the minimal quoted penalty cost for that particular mode. If the addressees' agent indicates it is satisfied, the caller's agent 21 accesses from the Availability object 23 a secret code, which was shared between the addressee's agent 22 and the Availability object 23 at the creation of the latter. The secret is used to provide assurance to the Addressee's agent 22 that the assistive process has indeed been used.

A valid Availability object 23 should allow (expect) multiple invocations on its 'read' steps (steps 1 to 11), (from one or more callers) but only a single invocation on its createRequest() steps (12 to 14). Once such a request has been made the availability object suspends itself (via its private 'active' attribute), since only a single communication connection should be created from a single Availability object 23. The existence of a communication connection will, in any case, affect the addressee's subsequent availability. The Availability object should enter a similar (suspended) state if the querying continues significantly beyond its stated 'time to live'.

The system has been described on the basis of only three fundamental communicative modes (text, audio, and video - see Figure 1), although the system could be easily extended to include additional modes (e.g. haptic or olfactory communication). An additional type of mode, across which one may certainly wish to distinguish availabilities, is multiplayer networked games.

Although the specified method signature provides rich, additional dependencies, they are non-extensible. In specific situations (for example, beyond two-person participation, or if it is wished to add the ability to view expected availabilities at times in the future), a range of other dependencies becomes feasible. Rather than extending this method signature indefinitely, the modular and extensible nature of XML can be used in order to define the particular parameter list to be supplied to the availability method.

The ability to richly describe availability to partake in multi-user sessions could greatly aid the establishment of such sessions. An initiator may simultaneously analyse the responses of several other (potential) participants in order to assess the most appropriate communication pattern, and if the other participants had anticipated such a multi-

EP 1 381 185 A1

party pattern, they could even have added additional dependencies to their availability algorithm in order to achieve finer-grained control. An additional potential problem in multi-way communication is that there is an exponential explosion in the number of possible communicative modes, though this will be reduced by the social adoption of a smaller set of commonly used (and quoted) patterns.

The process as it stands deals with a new representation of availability in terms of {willingness, cost}, but there are times when less-detailed representations remain appropriate, or complementary. For example, the top-level Availability object 23 could also be designed to include a more abstract description of an individual's situation, and that in itself will sometimes be sufficient to guide the caller's choice of mode. In such circumstances, the balance between use of such an abstraction, and use of the meta-data describing the algorithm then remains under the control of the addressee.

After a call has been made, the caller's and addressee's agent may conduct an evaluation, so that the addressee's agent 22 can improve its future behaviour, by capturing feedback from the user 20 during or after the call is complete. This allows the agents to learn from each other, to facilitate future communications attempts. Where a penalty cost has been incurred by the caller 20, the addressee may also wish to re-pay that cost if he considers the interruption was justified. This can be facilitated through the two users' agents, initiated by the addressee's agent inviting the addressee to refund the cost.

**Claims**

1. A process for mediating communication attempts from a caller to an addressee, comprising the steps of:

    the caller transmitting an information request to a mediation agent
    the mediation agent generating from stored data one or more availability profiles, identifying the availability of the addressee for a communication connection
    the caller retrieving an availability profile, the availability profile including non-Boolean graduated availability values, indicative of addressee preferences
    the caller generating a call set-up request in accordance with the availability profile.

2. A process according to claim 1, wherein the availability profile includes a code associated with the addressee, and wherein a call set-up request to that addressee is only connected if the code currently associated with the addressee is included in the request.

3. A process according to claim 1 or claim 2, in which the mediation agent identifies, from stored data, whether any special conditions are applicable to the caller

4. A process according to any preceding claim, in which the mediation agent identifies from stored data one or more communications modes available for use between the caller and the addressee

5. A process according to claim 4, wherein different availability values are provided for different modes of communication

6. A process according to claim 5, wherein the availability profile identifies whether any of the modes are only available under special conditions

7. A process according to claim 4, 5 or 6, wherein the available communications modes are defined with reference to at least one of directionality, mode or synchronicity.

8. A process according to claim 4, 5, 6, or 7 wherein on receiving the availability profile the caller negotiates with the addressee's agent to determine a mutually optimum communication mode

9. A process according to any preceding claim, wherein the initial request identifies one or more of the following caller properties:

    identity of the caller
    topic(s) of intended conversation
    expected duration of conversation
    expected benefit of conversation to caller

expected benefit of conversation to addressee
financial penalty the caller is prepared to pay
degree of urgency

and the availability profile generated depends on these properties

10. A process according to claim 9, wherein the caller provides values for the required caller properties in response to a prompt from the addressee's mediation agent.

11. A process according to claim 9 or 10, in which a default value is used for any property for which the caller does not identify the values for the required properties.

12. A process according to any preceding claim, wherein the process by which the caller may complete a call request has a variable degree of difficulty, the degree of difficulty being varied according to the availability value in the addressee's availability profile.

13. A process according to claim 12, wherein the degree of difficulty relates to the complexity of a task.

14. A process according to claim 12, wherein the degree of difficulty relates to the physical force required to operate a control.

15. A process according to claim 12, wherein the degree of difficulty relates to a financial penalty payable to the addressee by the caller, the process including a payment process for performing the financial transaction of debiting and crediting financial accounts of the caller and addressee respectively.

16. A process according to claim 15, wherein the process includes a capability for allowing the addressee to reimburse or cancel the said transaction.

17. A process according to any preceding claim, wherein the process is mediated between the mediation agent acting for the addressee and a second mediation agent acting for the caller.

18. A process according to any preceding claim, wherein the availability profile, once generated, is stored by the mediation agent for a predetermined period such that it may be accessed for a plurality of call requests by one or more callers during that period.

19. A process according to claim 18, wherein the stored availability profile ceases to be made available to callers when a call is actually connected.

20. A general-purpose computer programmed to perform the mediation process of any preceding claim

21. A call mediation station for managing the mediation of telecommunications call requests, comprising means for receiving inputs indicative of communications modes available for use in calls made to an addressee terminal, means for storing said data, means for generating availability profile data from said stored data, the availability profile including non-Boolean graduated availability values, indicative of addressee preferences, and means for transmitting said availability profile input to a caller in response to a call request.

22. A call mediation station according to claim 21, further having means to store data relating to individual calling terminals, means to generate and store different availability profiles for different calling terminals, means to identify the caller making a call request and means to transmit the respective availability profile stored for that caller

23. A call mediation station according to claim 22, being a supervisory station arranged to mediate requests to a plurality of addressee terminals.

24. A call mediation station according to claim 22, being a terminal station arranged to mediate control of incoming call attempts to itself.

25. A telecommunications station for generating call requests, comprising means for requesting availability information from an call mediation addressee, and control means for processing the availability information received to generate a call request in response to said availability information, wherein the availability information includes one or more non-Boolean graduated properties and the control means includes means for controlling the responsiveness to a command action in accordance with the value of said graduated properties.

26. A station according to claim 25 wherein the control means is a haptic control arranged such that the force required to operate it is related to the values of the graduated properties.

a)

b)

c)

d)

e)

f)

# Figure 1

g)

h)

i)

# Figure 3.

Caller 20  Caller's agent 21  Addressee's agent 22

1

2 getAvailability(callerID)  Availability object 23

3  (created with shared secret)

4

queries 5

6

7

8

9

10

11  (check adequate payment)

12

createRequest(callersRef, pattern, algorithm params, payment)

13

14

mediatedRequest(callersRef, sharedsecret, + probably the other params too))

**Figure 2.**

## European Patent Office

## EUROPEAN SEARCH REPORT

Application Number

EP 02 25 4902

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/087649 A1 (HORVITZ ERIC J) 4 July 2002 (2002-07-04) | 1,3-5, 7-9,18, 20,21,25 | H04L12/24 H04L12/58 H04L29/06 |
| Y | * abstract * | 2 | |
| A | * figures 1-6 * | 6,10-12, 16,17, 19, 22-24,26 | |
| | * paragraphs [0052],[0053] * * paragraph [0097] * * paragraphs [0106]-[0108] * * paragraphs [0287],[0288] * * paragraphs [0301]-[0317] * --- | | |
| Y | US 6 073 165 A (THAXTER JASON ET AL) 6 June 2000 (2000-06-06) | 2 | |
| A | * abstract * * column 4, line 20-41 * * column 5, line 37-60 * * column 6, line 8-35 * * column 8, line 66 - column 7, line 14 * --- | 1,3-26 | |
| Y | WO 01 69387 A (HOVEL DAVID O ;HORVITZ ERIC J (US); JACOBS ANDREW W (US); KADIE CA) 20 September 2001 (2001-09-20) | 1,3-5, 21,25 | TECHNICAL FIELDS SEARCHED (Int.Cl.7) H04L |
| A | * abstract * | 2,6-20, 22-24,26 | |
| | * claims 58-66 * * page 3, line 7-16 * * page 6, line 19-31 * * page 11, line 10 - page 12, line 9 * * page 18, line 3-11 * * page 33, line 4-19 * * page 39, line 9 - page 40, line 14 * --- -/-- | | |

The present search report has been drawn up for all claims

| Place of search | Date of completion of the search | Examiner |
|---|---|---|
| THE HAGUE | 10 December 2002 | Cichra, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**European Patent Office**

**EUROPEAN SEARCH REPORT**

Application Number

EP 02 25 4902

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 5 812 865 A (GOLDSTEIN RICHARD J ET AL) 22 September 1998 (1998-09-22) | 1,3-5, 21,25 | |
| A | * abstract * <br><br> * column 4, line 28-51 * <br> * column 11, line 44-67 * <br> --- | 2,6-20, 22-24,26 | |
| A | GB 2 328 110 A (MITEL CORP) 10 February 1999 (1999-02-10) <br> * the whole document * <br> ----- | 1-26 | |

TECHNICAL FIELDS SEARCHED (Int.Cl.7)

The present search report has been drawn up for all claims

| Place of search | Date of completion of the search | Examiner |
|---|---|---|
| THE HAGUE | 10 December 2002 | Cichra, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 02 25 4902

This annex lists the patent family members relating to the patent documents cited in the above-mentioned European search report.
The members are as contained in the European Patent Office EDP file on
The European Patent Office is in no way liable for these particulars which are merely given for the purpose of information.

10-12-2002

| Patent document cited in search report | | Publication date | Patent family member(s) | | Publication date |
|---|---|---|---|---|---|
| US 2002087649 | A1 | 04-07-2002 | AU | 4755501 A | 24-09-2001 |
| | | | US | 2002054117 A1 | 09-05-2002 |
| | | | AU | 4926101 A | 24-09-2001 |
| | | | WO | 0169432 A2 | 20-09-2001 |
| | | | WO | 0169387 A2 | 20-09-2001 |
| US 6073165 | A | 06-06-2000 | AU | 749883 B2 | 04-07-2002 |
| | | | AU | 8598198 A | 22-02-1999 |
| | | | BR | 9812116 A | 18-12-2001 |
| | | | EP | 1010084 A1 | 21-06-2000 |
| | | | JP | 2002526946 T | 20-08-2002 |
| | | | NZ | 502843 A | 31-05-2002 |
| | | | TW | 391091 B | 21-05-2000 |
| | | | WO | 9906915 A1 | 11-02-1999 |
| WO 0169387 | A | 20-09-2001 | AU | 4755501 A | 24-09-2001 |
| | | | AU | 4926101 A | 24-09-2001 |
| | | | WO | 0169432 A2 | 20-09-2001 |
| | | | WO | 0169387 A2 | 20-09-2001 |
| | | | US | 2002087649 A1 | 04-07-2002 |
| | | | US | 2002054117 A1 | 09-05-2002 |
| US 5812865 | A | 22-09-1998 | NONE | | |
| GB 2328110 | A | 10-02-1999 | NONE | | |

EPO FORM P0459

For more details about this annex : see Official Journal of the European Patent Office, No. 12/82